# EUROPEAN PATENT SPECIFICATION

(11) **EP 2 834 028 B1**
(45) Date of publication and mention of the grant of the patent: **12.08.2015**
(21) Application number: 13716751.6
(22) Date of filing: 03.04.2013
(51) Int. Cl.: B21J 15/02, B21J 15/04, F16B 19/08, B23P 19/06

(54) **METHOD AND DEVICE FOR FASTENING A RIVET**
VERFAHREN UND VORRICHTUNG ZUR BEFESTIGUNG EINES NIETELEMENTS
PROCÉDÉ ET DISPOSITIF DE FIXATION D'UN RIVET

(30) Priority: 04.04.2012 DE 102012102951
(43) Date of publication of application: 11.02.2015
(73) Proprietor: Newfrey LLC, Newark, Delaware 19711 (US)
(72) Inventor: SCHNEIDER, Stefan, 35394 Gießen (DE); BAUMANN, Horst, 35394 Gießen (DE); MOESER, Joachim, 35394 Gießen (DE)
(74) Representative: Haar, Lucas Heinz Jörn
(86) International application number: PCT/EP2013/056981
(87) International publication number: WO 2013/150049

(56) References cited:
- EP-A2- 0 093 286
- EP-B1- 1 396 646
- DE-A1- 10 241 326
- GB-A- 498 059

## Description

The invention relates to a method for fastening a rivet element to at least one workpiece, in which a rivet hole is produced in the at least one workpiece with the aid of the rivet element, wherein the rivet element has a hollow shank with a bore, a closed punch head at one end of the shank, a flange projecting outward from the shank at a distance from the punch head, and a deformation region between the flange and the punch head, and is driven through the workpiece by means of a mandrel inserted in the bore. The invention also relates to a device for carrying out the method.

In a method of the specified type known from DE 102 41 326 A1, (on which the preamble of claims 1,7 and 11 is based) the rivet element has an internal thread in its bore, into which is screwed the mandrel that is provided with an external thread. In order to form the closure flange contacting the back of the workpiece, the mandrel is withdrawn opposite the direction of insertion, wherein the rivet element is held in place in the position introduced in the workpiece by means of a retaining tool. Once the closure flange is formed, the mandrel must be unscrewed from the rivet element, which is now fastened to the workpiece, by means of rotation.

The prior art method requires a certain amount of time for both screwing in and unscrewing of the rivet mandrel, which prolongs the cycle time for setting a rivet element. The prior art method also requires a complicated fastening device, since rotary motions of the mandrel, or of the rivet element as well, must be produced in two opposite directions in addition to the axial motions required for setting and deforming the rivet element. The prior art method also influences the design of the rivet element, since an internal thread section is required between the deformation region of the rivet element and the punch head that produces the rivet hole that is sufficiently long to allow transmission from the mandrel to the rivet element of the force required to form the closure flange. The rivet element thus has a relatively long projecting length on the back of the workpiece after fastening on account of the thread.

A method is known from EP 1 396 646 B1 in which a rivet element that produces the rivet hole is designed as a blind rivet, wherein the mandrel, with a suitably enlarged mandrel head, is accommodated in a tubular rivet body with a closed end in such a manner that the enlarged mandrel head has a radially extending shoulder that works together with an internal shoulder on the inner surface of the rivet body. In a blind rivet of this type, the mandrel head remains behind in the rivet body after setting of the blind rivet, and thus can produce undesirable rattling noises if it is not clamped firmly in place.

It is an object of the present invention is to provide an improved method for fastening a one-piece rivet element to a workpiece. It is further an object of the present invention to provide a fastening device that permits fastening of a one-piece rivet element to a workpiece in a simple manner and with little expenditure of time. A further object of the present invention is to provide a simple and inexpensive producible one-piece rivet element.

The object is achieved according to one aspect of the present invention by a method for fastening a rivet element to at least one workpiece, in which a rivet hole is produced in the at least one workpiece with the aid of the rivet element, wherein the rivet element has a hollow shank with a bore, a closed punch head at one end of the shank, a flange projecting outward from the shank at a distance from the punch head, and a deformation region between the flange and the punch head, comprising the steps:
a) supporting the at least one workpiece on a first dolly,
b) inserting a mandrel into the bore of the rivet element by an axial motion until the mandrel end contacts the punch head,
c) pressing the punch head against the at least one supported workpiece by means of a force acting on the mandrel, forming the rivet hole in the at least one workpiece by means of the punch head, and inserting the rivet element in the rivet hole until the flange contacts the at least one workpiece,
d) supporting the rivet element on a second dolly next to the mandrel,
e) placing a riveting die on the punch head and deforming the deformation region of the shank into a closure flange that contacts the workpiece by causing the riveting die and the second dolly to approach one another, and withdrawing the mandrel.

In the method according to the present invention, the mandrel is inserted in the bore of the rivet element by an axial motion until the mandrel end contacts the punch head, and is not connected to the rivet element in such a way that a tensile force can be transmitted from the mandrel to the rivet element. The mandrel thus serves only to introduce the driving force directed toward the workpiece in order to press the punch head into the workpiece, produce the rivet hole, and push the rivet element forward into the rivet hole until its flange rests against the workpiece. During the ensuing fastening process by which the closure flange is formed, the mandrel is not used to introduce force, but rather must yield to the shortening of the rivet element. However, during this process the mandrel can be used to support and guide the rivet element in order to counteract lateral buckling and non-uniform deformation of the rivet element. The mandrel can be actively withdrawn during the approach of the riveting die to the second dolly or can be pushed back by the deforming rivet element. Prior withdrawal of the mandrel from the rivet element is also possible.

In contrast to the prior art method, the formation of the closure flange takes place with the aid of a riveting die that is located on the side of the workpiece opposite the mandrel and that is placed on the punch head of the rivet element and acts on the rivet element, which is supported on a second dolly on the mandrel side. The application of force to the rivet element from the outside has the advantage that the rivet element can have a shape that is easy to produce, and that no means for force transmission need be provided in the bore of the rivet element.

The method according to the invention has the advantage that it can be carried out with little expenditure of time, since the time for screwing and unscrewing the mandrel is eliminated. Moreover, it is advantageous that the rivet element can have a short axial length and produces only a small projecting length on the back of the workpiece, since no sections for transmitting tensile force between the rivet element and the mandrel are needed.

The mandrel is a part of the fastening device and not part of the rivet element, which reduces the production costs of the rivet element.

The rivet element is a single piece. Therefore, noises from relative motions in the rivet element do not arise.

Because of the closed swage head, the rivet element forms a splash-proof closure of the rivet hole. A seal can be provided under the flange of the rivet element in order to achieve increased water-tightness or gas-tightness.

The method according to the invention is suitable for fastening one or more workpieces made of metallic or nonmetallic materials. In a fastening stack of multiple workpieces, the arrangement of materials is arbitrary and also is independent of the thickness of the materials. Workpieces made of plastic, for example carbon-fiber-reinforced plastic, can be fastened without prepunching, with no metallic material layer on the back of the fastening stack.

According to another advantageous aspect of the present invention the method can provide that during the formation of the rivet hole and the insertion of the rivet element in the rivet hole (method step c), the rivet element is additionally driven with the aid of the second dolly, which surrounds the mandrel in an annular fashion. This achieves a better distribution of the drive force in the rivet element, and at the end of the insertion process the second dolly is already in the support position for the subsequent setting of the closure flange.

The approach of the riveting die to the second dolly to deform the deformation region and produce the closure flange can take place either through a motion of the riveting die or through a motion of the second dolly. A motion of the riveting die has the advantage that the workpiece can remain in the position previously assumed for the production of the rivet hole. If the approach is accomplished by a motion of the second dolly, this can advantageously take place with the aid of the drive device by which the mandrel is also driven. In both cases, the approach travel or the force applied for the approach can be limited such that the closure flange is deformed in the desired manner, and excessive tool loads are avoided.

According to a further aspect of the present invention, there is provided an advantageous fastening device for carrying out the method, which fastening device comprises a frame having a first support structure and a second support structure, having a tubular second dolly and a cylindrical mandrel on the first support structure, wherein the mandrel and the second dolly are arranged coaxially one inside the other and are movable in the direction of the second support structure by mutually independent first and second drive devices, and having an annular first dolly and a riveting die on the second support structure, wherein the first dolly and the riveting die are arranged in a position aligned with the second dolly in at least one operating state, wherein the riveting die can be moved in the direction of the first support structure by a third drive device, and having a controller for controlling the drive devices.

According to a further aspect of the present invention, there is provided a rivet element that is advantageous for the method according to the invention and comprises a hollow, cylindrical shank that has a cylindrical bore without undercut, a closed, flat base at one end of the shank that forms a punch head 5 for producing a rivet hole, and an annular flange extending radially outward at the other, open end of the shank that serves to axially support the rivet element on a workpiece, wherein the shank adjacent to the punch head forms a deformation region for forming a closure flange.

The rivet element according to the present invention is simple and inexpensive to produce, because the core tool for producing the bore can be withdrawn axially from the bore.

The present invention is explained in detail below using exemplary embodiments that are shown in the drawings, wherein:
- Figure 1: shows a rivet element according to the invention,
- Figure 2: shows the individual method steps of the method according to the invention, and
- Figure 3: shows a device for carrying out the method according to the invention.

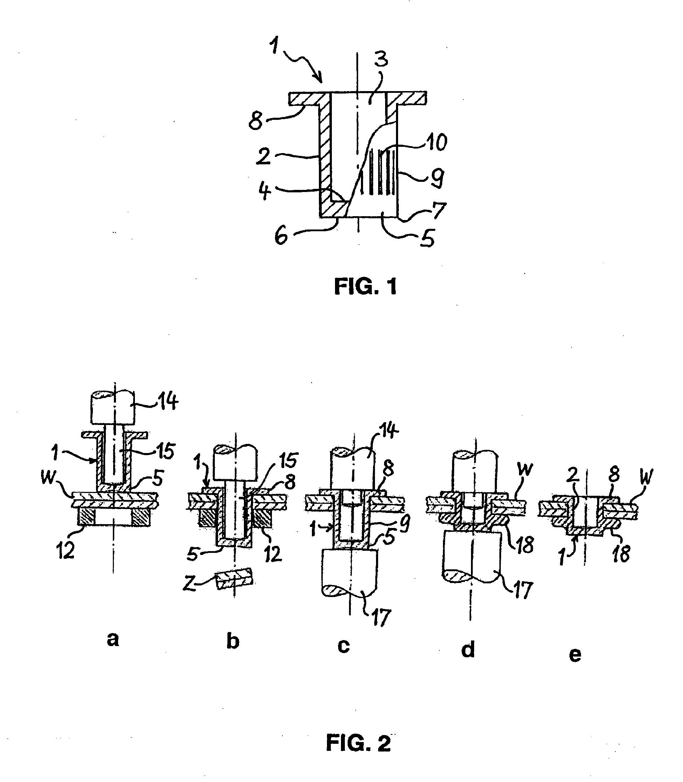

The rivet element 1 shown in Figure 1 has a hollow, cylindrical shaft 2 with a cylindrical bore 3. One end of the shaft 2 is closed by a flat base 4, and forms a punch head 5 that serves to produce a rivet hole. The punch head 5 has an end face 6 that can be flat, concave, or convex, or can have the shape of an obtuse conical point. The edge of the end face 6 forms a cutting edge 7 together with the adjacent circumferential surface of the shank 2. At the other, open end, the shank 2 has an annular flange 8 extending radially outward that provides axial support of the rivet element 1 on a workpiece. The shank 2 adjacent to the punch head 5 forms a deformation region 9 that can be provided with embossed longitudinal grooves 10. The longitudinal grooves 10 contribute to a uniform deformation in the formation of a closure flange.

Figure 2 illustrates the individual steps of the method for fastening a rivet element 1 to a workpiece W. In the example shown, the workpiece W consists of two sheets lying one upon the other, which rest on an annular dolly 12 held by a support structure that is not shown. Located on the side of the workpiece W facing away from the dolly 12 are a second tubular dolly 14 and a mandrel 15, which is movably carried in the bore of the dolly 14. The dollies 12, 14 are arranged to be coaxial to one another. The mandrel 15 is movable by means of a drive device, and is retracted into the dolly 14 at the start of a fastening process so that a rivet element 1 that has been supplied can be placed under the dolly 12 with its punch head 5 on the workpiece W. Once the rivet element 1 has been oriented to be coaxial to the mandrel 15 with the aid of positioning means that are not shown, the mandrel 15 is advanced with the aid of its drive device into the bore 3 of the rivet element 1 until its end face rests against the base 4 of the rivet element 1. This state is shown in Figure 2a.

In the next step, the force for driving the mandrel 15 is increased, and the rivet element 1 with the punch head 5 in front is pressed through the workpiece W resting on the dolly 12. In this process, the punch head 5 produces a rivet hole in the workpiece W and thereby separates a disk-shaped slug Z from the workpiece W, as is shown in Figure 2b. By limiting the mandrel travel or mandrel force, the method step is ended when the flange 8 of the rivet element 1 rests on the workpiece W.

For the formation of a closure flange, the dolly 12 is removed from the rivet element 1 and the dolly 14 is placed on the flange 8. In addition, a riveting die 17 is advanced to the rivet element 1 from underneath by means of a second drive device and is brought into contact with the punch head 5. This is shown in Figure 2c.

Then, by increasing the force acting on the riveting die 17, the deformation region 9 of the shank 2 projecting from the workpiece W is swaged axially and formed into a disk-shaped closure flange 18 that rests against the underside of the workpiece W, as shown in Figure 2d.

Figure 2e shows the completed fastened joint, in which the two sheets of the workpiece W are permanently fastened to one another by the flange 8, the closure flange 18, and the shank 2 of the rivet element 1. The final position of the riveting die and the appropriate formation of the closure flange 18 that depends thereon can be determined by a limitation of the die travel or of the force for driving the die.

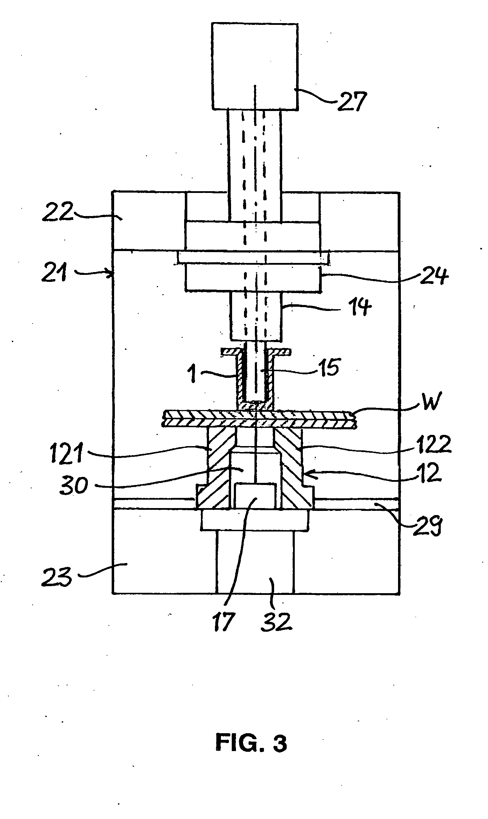

The device 20 shown in Figure 3 has a frame 21, for example in the form of a C-clamp, that forms a first support structure 22 and a second support structure 23. The support structures 22, 23 are located at a distance from one another. Fastened to the first support structure 22 is a first drive device 24 by means of which a tubular dolly 14 is linearly movable. Located in the bore of the dolly 14 is a longitudinally movable cylindrical mandrel 15, which is movable relative to the dolly 14 by means of a second drive device 27, and one end of which can be extended out of the end of the dolly 14 facing the support structure 23.

Located on the support structure 23 is an annular dolly 12 that is divided into two halves 121 and 122 along its axial center plane. Both halves 121, 122 are supported so as to be movable at right angles to the axial plane of separation on a guide rail 29 located on the support structure 23, and can be moved away from one another out of the center position shown, where they contact one another, by means of actuators that are not shown. The dolly 12 has a through-bore 30, which in the center position is oriented to be coaxial to the mandrel 15 and the dolly 14. A riveting die 17 that is movable in the direction of the support structure 22 by means of a drive device 32 supported on the support structure 23 projects into the bore 30. The drive devices 24, 27, and 32 are connected to a controller by which means they are independently controllable. They can be driven pneumatically, hydraulically or electrically.

Figure 3 shows the device 20 at the start of a fastening process. Two platelike workpieces W rest on the dolly 12 in its retracted center position. On the workpieces W sits a rivet element 1, into the bore of which the end of the mandrel 15 is extended. To fasten the rivet element 1, first the mandrel 15 is moved toward the support structure 23. In this process, the driving can be accomplished either by the drive device 27 or, with the drive device 27 locked, by the drive device 24 together with the dolly 25. As soon as the rivet element 1 is brought into the position shown in Figure 2b, the advance of the mandrel 15 is ended. The dolly 14 is placed on the flange 8 of the rivet element 1 and in this position is locked relative to the support structure 22. At the same time, the two halves 121, 122 of the dolly 12 are moved apart along the guide rail 29, and the disk-shaped slug separated from the workpiece W is removed from the riveting die 17 by a suitable means, for example an air stream or with the aid of a slide. By driving the drive device 32, the riveting die 17 can then be extended and a closure flange can be formed. For this purpose, the mandrel 15 is either retracted or is pushed into the dolly 14 by the deforming rivet element.

## Claims

1. Method for fastening a rivet element (1) to at least one workpiece (W), in which a rivet hole is produced in the at least one workpiece (W) with the aid of the rivet element (1), wherein the rivet element (1) has a hollow shank (2) with a bore (3), a closed punch head (5) at one end of the shank (2), a flange (8) projecting outward from the shank (2) at a distance from the punch head (5), and a deformation region (9) between the flange (8) and the punch head (5), **characterised by** the steps:
a) supporting the at least one workpiece (W) on a first dolly (12),
b) inserting a mandrel (15) into the bore (3) of the rivet element (1) by an axial motion until the mandrel end contacts the punch head (5),
c) pressing the punch head (5) against the at least one supported workpiece (W) by means of a force acting on the mandrel (15), forming the rivet hole in the at least one workpiece (W) by means of the punch head (5), and inserting the rivet element (1) in the rivet hole until the flange (8) contacts the at least one workpiece (W),
d) supporting the rivet element (1) on a second dolly (14) next to the mandrel (15),
e) placing a riveting die (17) on the punch head (5) and deforming the deformation region (9) of the shank (2) into a closure flange (18) that contacts the workpiece (W) by causing the riveting die (17) and the second dolly (14) to approach one another, and withdrawing the mandrel (15).

2. Method according to claim 1, **characterized in that**, during the method step c), the rivet element (1) is additionally pressed against the workpiece (W) with the second dolly (14), which surrounds the mandrel (15) in an annular fashion.

3. Method according to claim 1 or 2, **characterized in that** the rivet element (1) is pressed through at least two workpieces (W), and these workpieces are fastened to one another by the formation of the closure flange (18).

4. Method according to one of the preceding claims, **characterized in that**, in the method step e), the distance for the approach of the second dolly (14) and the riveting die (17) is determined by a limitation of the die travel.

5. Method according to one of the preceding claims, **characterized in that**, in the method step e), the formation of the closure flange (18) is determined by a limitation of the force applied for the approach of the second dolly (14) and the riveting die (17).

6. Method according to one of the preceding claims, **characterized in that** longitudinal grooves (10) are embossed in the outer surface of the shank (2) of the rivet element (1) in the deformation region (9).

7. Fastening device for fastening a rivet element (1) to at least one workpiece (W), wherein the rivet element (1) is designed to produce a rivet hole in the at least one workpiece (W), and has a hollow shank (2) with a bore (3), a closed punch head (5) at one end of the shank (2), a flange (8) projecting outward from the shank (2) at a distance from the punch head (5), and a deformation region (9) between the flange (8) and the punch head (5), wherein the fastening device is **characterised by** comprising:
A frame (21) with a first support structure (22) and a second support structure (23), a tubular, second dolly (14) and a cylindrical mandrel (15) on the first support structure (22) that are arranged coaxially one inside the other and are movable in the direction of the second support structure (23) by mutually independent first and second drive devices (24, 27), and an annular first dolly (12) and a riveting die (17) on the second support structure (23) that in at least one operating state are arranged in a position on the second support structure (23) in alignment with the second dolly (14), wherein the riveting die (17) can be moved in the direction of the first support structure (22) by a third drive device (32), and a controller for controlling the first, second, and third drive devices (24, 27, 32).

8. Fastening device according claim 7, **characterized by** travel limiting means for limiting the operating travel of the riveting die (17).

9. Fastening device according to one of claims 7 or 8, **characterized by** force limiting means for limiting the driving force of the riveting die (17).

10. Fastening device according to one of claims 7 through 9, **characterized in that** the first dolly (12) consists of two mutually complementary parts that can be moved apart and together at right angles to the fastening direction.

11. Rivet element (1) for the method according to claim 1 and the fastening device according to claim 7, **characterised by** having a hollow, cylindrical shank (2) that has a cylindrical bore (3) without undercut, having a closed, flat base (4) that forms, at one end of the shank (2), a punch head 5 for producing a rivet hole, and having an annular flange (8) extending radially outward that serves to axially support the rivet element (1) on a workpiece (W), wherein the shank (2) adjacent to the punch head (5) forms a deformation region (9) for forming a closure flange (18).

12. Rivet element (1) according to claim 11, **characterized in that** the outside of the deformation region (9) is provided with embossed longitudinal grooves (10).

## Patentansprüche

1. Verfahren zum Befestigen eines Nietelements (1) an wenigstens einem Werkstück (W), bei welchem mit Hilfe des Nietelements (1) ein Nietloch in dem wenigstens einen Werkstück (W) erzeugt wird, wobei das Nietelement (1) einen hohlen Schaft (2) mit einer Bohrung (3), an einem Ende des Schafts (2) einen geschlossenen Stempelkopf (5), in einem Abstand von dem Stempelkopf (5) einen von dem Schaft (2) nach außen abstehenden Flansch (8) und zwischen dem Flansch (8) und dem Stempelkopf (5) einen Verformungsbereich (9) aufweist, **gekennzeichnet durch** die Schritte:
a) Abstützen des wenigstens einen Werkstücks (W) an einem ersten Gegenhalter (12),
b) Einsetzen eines Dorns (15) mit axialer Bewegung in die Bohrung (3) des Nietelements (1) bis das Dornendes an dem Stempelkopf (5) anliegt,
c) Drücken des Stempelkopfs (5) mit einer auf den Dorn (15) einwirkenden Kraft gegen das abgestützte, wenigstens eine Werkstück (W), Bildung des Nietlochs in dem wenigstens einen Werkstück (W) mittels des Stempelkopfs (5) und Einbringen des Nietelements (1) in das Nietloch bis der Flansch (8) an dem wenigstens einen Werkstück (W) anliegt,
d) Abstützen des Nietelements (1) an einem dem Dom (15) benachbarten zweiten Gegenhalter (14),
e) Ansetzen eines Nietstempels (17) an den Stempelkopf (5) und Vorformen des Verformungsbereichs (9) des Schafts (2) zu einem an dem Werkstück (W) anliegenden Schließflansch (18) **durch** Annähern des Nietstempels (17) und des zweiten Gegenhalters (14) und Zurückziehen des Dorns (15).

2. Verfahren nach Anspruch 1, **dadurch gekennzeichnet, dass** bei dem Verfahrensschritt c) das Nietelement (1) zusätzlich mit dem zweiten Gegenhalter (14), der den Dorn (15) ringförmig umgibt, gegen das Werkstück (W) gedrückt wird.

3. Verfahren nach einem der Ansprüche 1 oder 2, **dadurch gekennzeichnet, dass** das Nietelement (1) durch mindestens zwei Werkstücke (W) gedrück wird und diese durch Bilden des Schließflansches (18) aneinander befestigt werden.

4. Verfahren nach einem der vorhergehenden Ansprüche, **dadurch gekennzeichnet, dass** im Verfahrensschritt e) die Strecke der Annäherung des zweiten Gegenhalters (14) und des Nietstempels (17) durch eine Begrenzung des Nietstempelwegs bestimmt ist.

5. Verfahren nach einem der vorhergehenden Ansprüche, **dadurch gekennzeichnet, dass** im Verfahrensschritt e) die Bildung des Schließflansches (18) durch die Kraft bestimmt ist, die zur Annäherung des zweiten Gegenhalters (14) und des Nietstempels (17) aufgewendet wird.

6. Verfahren nach einem der vorhergehenden Ansprüche, **dadurch gekennzeichnet, dass** im Verformungsbereich (9) Längsrillen (10) in die Außenfläche des Schafts (2) des Nietelements (1) eingeprägt werden.

7. Befestigungsvorrichtung zum Befestigen eines Nietelements (1) an wenigstens einem Werkstück (W), wobei das Nietelement (1) zur Erzeugung eines Nietlochs in dem wenigstens einen Werkstück (W) ausgebildet ist und einen hohlen Schaft (2) mit einer Bohrung (3), an einem Ende des Schafts (2) einen geschlossenen Stempelkopf (5), in einem Abstand von dem Stempelkopf (5) einen von dem Schaft (2) nach außen abstehenden Flansch (8) und zwischen dem Flansch (8) und dem Stempelkopf (5) einen Verformungsbereich (9) aufweist, wobei die Befestigungsvorrichtung **dadurch gekennzeichnet ist, dass** sie umfasst:
Ein Gestell (21) mit einer ersten Stützstruktur (22) und einer zweiten Stützstruktur (23), an der ersten Stützstruktur (22) einen rohrförmigen zweiten Gegenhalter (14) und einen zylindrischen Dorn (15), die koaxial ineinander angeordnet und durch voneinander unabhängige, erste und zweite Antriebseinrichtungen (24, 27) in Richtung der zweiten Stützstruktur (23) bewegbar sind, und an der zweiten Stützstruktur (23) einen ringförmigen ersten Gegenhalter (12) und einen Nietstempel (17), die in wenigstens einem Betriebszustand in einer mit dem zweiten Gegenhalter (14) fluchtenden Position an der zweiten Stützstruktur (23) angeordnet sind, wobei der Nietstempel (17) durch eine dritte Antriebseinrichtung (32) in Richtung der ersten Stützstruktur (22) bewegbar ist, und eine Steuereinrichtung zur Steuerung der ersten, zweiten und dritten Antriebseinrichtung (24, 27, 32).

8. Befestigungsvorrichtung nach Anspruch 7, **gekennzeichnet durch** Wegbegrenzungsmittel zur Begrenzung des Arbeitswegs des Nietstempels (17).

9. Befestigungsvorrichtung nach einem der Ansprüche 7 oder 8, **gekennzeichnet durch** Kraftbegrenzungsmittel zur Begrenzung der Treibkraft des Nietstempels (17).

10. Befestigungsvorrichtung nach einem der Ansprüche 7 bis 9, **dadurch gekennzeichnet, dass** der erste Gegenhalter (12) aus zwei einander ergänzenden Teilen besteht, die quer zur Befestigungsrichtung auseinander und zusammen bewegbar sind.

11. Nietelement (1) für das Verfahren nach Anspruch 1 und die Befestigungsvorrichtung nach Anspruch 7, **gekennzeichnet durch** einen hohlen, zylindrischen Schaft (2), der eine zylindrische Bohrung (3) ohne Hinterschnitt aufweist, mit einem geschlossenen, ebenen Boden (4), der an einem Ende des Schafts (2) einen Stempelkopf (5) zur Erzeugung Nietlochs bildet, und mit einem sich radial nach außen erstreckenden, ringförmigen Flansch (8), der zur axialem Abstutzung des Nietelements (1) an einem Werkstück (W) dient, wobei der Schaft (2) angrenzend an den Stempelkopf (5) einen Verformungsbereich (9) zur Bildung eines Schließflansches (18) bildet.

12. Nietelement (1) nach Anspruch 11, **dadurch gekennzeichnet, dass** der Verformungsbereich (9) auf seiner Außenseite mit eingeprägten Längsrillen (10) versehen ist.

## Revendications

1. Procédé pour fixer un élément de rivet (1) sur au moins une pièce à usiner (W), dans lequel un trou de rivet est produit dans la ou les pièces à usiner (W) à l'aide de l'élément de rivet (1), dans lequel l'élément de rivet (1) a une tige creuse (2) avec un alésage (3), une tête de poinçon fermée (5) au niveau d'une extrémité de la tige (2), une bride (8) faisant saillie vers l'extérieur à partir de la tige (2) à une certaine distance de la tête de poinçon (5), et une région de déformation (9) entre la bride (8) et la tête de poinçon (5), **caractérisé par** les étapes consistant à :
a) supporter la ou les pièces à usiner (W) sur un premier chariot (12),
b) insérer un mandrin (15) dans l'alésage (3) de l'élément de rivet (1) par un mouvement axial jusqu'à ce que l'extrémité du mandrin soit en contact avec la tête de poinçon (5),
c) comprimer la tête de poinçon (5) contre la ou les pièces à usiner (W) supportée au moyen d'une force agissant sur le mandrin (15), former le trou de rivet dans la ou les pièces à usiner (W) au moyen de la tête de poinçon (5) et insérer l'élément de rivet (1) dans le trou de rivet jusqu'à ce que la bride (8) soit en contact avec la ou les pièces à usiner (W),
d) supporter l'élément de rivet (1) sur un second chariot (14) à côté du mandrin (15),
e) placer une bouterolle (17) sur la tête de poinçon (5) et déformer la région de déformation (9) de la tige (2) dans une bride de fermeture (18) qui est en contact avec la pièce à usiner (W) en amenant la bouterolle (17) et le second chariot (14) à se rapprocher, et retirer le mandrin (15).

2. Procédé selon la revendication 1, **caractérisé en ce que**, pendant l'étape c) du procédé, l'élément de rivet (1) est comprimé, en outre, contre la pièce à usiner (W) avec le second chariot (14) qui entoure le mandrin (15) d'une manière annulaire.

3. Procédé selon la revendication 1 ou la revendication 2, **caractérisé en ce que** l'élément de rivet (1) est comprimé à travers au moins deux pièces à usiner (W), et ces pièces à usiner sont fixées entre elles par la formation de la bride de fermeture (18).

4. Procédé selon l'une des revendications précédentes, **caractérisé en ce que**, à l'étape e) du procédé, la distance pour l'approche du second chariot (14) et de la bouterolle (17), est déterminée par une limitation du déplacement de la bouterolle.

5. Procédé selon l'une des revendications précédentes, **caractérisé en ce que**, à l'étape e) du procédé, la formation de la bride de fermeture (18) est déterminée par une limitation de la force appliquée pour l'approche du second chariot (14) et de la bouterolle (17).

6. Procédé selon l'une des revendications précédentes, **caractérisé en ce que** les rainures longitudinales (10) sont gaufrées dans la surface externe de la tige (2) de l'élément de rivet (1) dans la région de déformation (9).

7. Dispositif de fixation pour fixer un élément de rivet (1) sur au moins une pièce à usiner (W), dans lequel l'élément de rivet (1) est conçu pour produire un trou de rivet dans la ou les pièces à usiner (W), et a une tige creuse (2) avec un alésage (3), une tête de poinçon fermée (5) au niveau d'une extrémité de la tige (2), une bride (8) faisant saillie vers l'extérieur à partir de la tige (2), à une certaine distance de la tête de poinçon (5), et une région de déformation (9) entre la bride (8) et la tête de poinçon (5), dans lequel le dispositif de fixation est **caractérisé en ce qu'**il comprend :
un châssis (21) avec une première structure de support (22) et une seconde structure de support (23), un second chariot tubulaire (14) et un mandrin cylindrique (15) sur la première structure de support (22) qui sont agencés de manière coaxiale l'un à l'intérieur de l'autre et sont mobiles dans la direction de la seconde structure de support (23) par les premier et deuxième dispositifs d'entraînement (24, 27) mutuellement indépendants, et un premier chariot annulaire (12) et une bouteroile (17) sur la seconde structure de support (23) qui, dans au moins un état opérationnel, sont agencés dans une position, sur la seconde structure de support (23), en alignement avec le second chariot (14), dans lequel la bouterolle (17) peut être déplacée dans la direction de la première structure de support (22) par un troisième dispositif d'entraînement (32), et un organe de commande pour commander les premier, deuxième et troisième dispositifs d'entraînement (24, 27, 32).

8. Dispositif de fixation selon la revendication 7, **caractérisé par** des moyens de limitation de déplacement pour limiter le déplacement opérationnel de la bouterolle (17).

9. Dispositif de fixation selon l'une des revendications 7 ou 8, **caractérisé par** des moyens de limitation de force pour limiter la force d'entraînement de la bouterolle (17).

10. Dispositif de fixation selon l'une des revendications 7 à 9, **caractérisé en ce que** le premier chariot (12) se compose de deux parties mutuellement complémentaires qui peuvent être éloignées et rapprochées en angle droit par rapport à la direction de fixation.

11. Elément de rivet (1) pour le procédé selon la revendication 1, et dispositif de fixation selon la revendication 7, **caractérisés en ce qu'**ils comprennent une tige cylindrique creuse (2) qui a un alésage cylindrique (3) sans dégagement, ayant une base plate fermée (4) qui forme, au niveau d'une extrémité de la tige (2), une tête de poinçon (5) pour produire une trou de rivet et ayant une bride annulaire (8) s'étendant radialement vers l'extérieur, qui sert à supporter axialement l'élément de rivet (1) sur une pièce à usiner (W), dans lesquels la tige (2), adjacente à la tête de poinçon (5), forme une région de déformation (9) pour former une bride de fermeture (18).

12. Elément de rivet (1) selon la revendication 11, **caractérisé en ce que** l'extérieur de la région de déformation (9) est prévu avec des rainures longitudinales (10) gaufrées.
